(19) Europäisches Patentamt
European Patent Office
Office européen des brevets

(11) **EP 3 267 015 A1**

(12) **EUROPEAN PATENT APPLICATION**
published in accordance with Art. 153(4) EPC

(43) Date of publication:
**10.01.2018 Bulletin 2018/02**

(51) Int Cl.:
*F02D 29/00* (2006.01)   *B60K 6/485* (2007.10)
*B60W 10/06* (2006.01)   *B60W 10/26* (2006.01)
*B60W 20/00* (2016.01)   *E02F 9/20* (2006.01)

(21) Application number: **16758883.9**

(22) Date of filing: **29.02.2016**

(86) International application number:
**PCT/JP2016/056065**

(87) International publication number:
**WO 2016/140190 (09.09.2016 Gazette 2016/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.03.2015   JP 2015040875**

(71) Applicant: **Hitachi Construction Machinery Co.,
Ltd.
Taito-ku,
Tokyo 110-0015 (JP)**

(72) Inventors:
• **OSAKA Tadashi
Tokyo 100-8280 (JP)**
• **TAKEUCHI Ken
Tsuchiura-shi
Ibaraki 300-0013 (JP)**
• **WATANABE Akira
Tsuchiura-shi
Ibaraki 300-0013 (JP)**

(74) Representative: **MERH-IP Matias Erny Reichl
Hoffmann
Patentanwälte PartG mbB
Paul-Heyse-Strasse 29
80336 München (DE)**

(54) **HYBRID CONSTRUCTION MACHINE**

(57) The object of the present invention is to provide a hybrid construction machine that can quickly warm up an electrical storage device and can improve the service life of the electrical storage device. This hybrid construction machine is equipped with: a prime mover (1); an electric motor that supplements the power of the prime mover (1) and generates electric power; an electrical storage device (8) that transmits power to and receives power from the electric motor; a warm-up circuit (25) that circulates a heating medium heated by waste heat from the prime mover (1) or the electric motor, or by a heater (40), to the vicinity of the electrical storage device (8); a control device that controls charging/discharging of the electrical storage device (8) and circulation of the heating medium of the warm-up circuit (25); and an outside air temperature measurement device that measures the outside air temperature. The control device executes warm-up operation by means of the heating medium, determines whether or not to execute charging/discharging of the electrical storage device (8) for the purpose of the warm-up operation in response to the outside air temperature measured by the outside air temperature measurement device, and conducts warm-up operation in which the warm-up operation by charging/discharging of the electrical storage device (8) is effected simultaneously.

FIG. 5

**Description**

Technical Field

The present invention relates to a hybrid construction machine including an electrical storage device that supplies electric power to a dynamo-electric motor such as a motor, an inverter, and the like.

Background Art

In recent years, in automobiles, those of a hybrid type and an electric type have become popular from the viewpoint of energy saving, and turning into the hybrid type has been in progress with respect to the construction machine also. In general, a construction machine such as a hydraulic excavator driven by a hydraulic system includes a hydraulic pump that enables work of a maximum load and a large engine that drives this hydraulic pump to cope with all works from a light load work to a heavy load work.

However, the heavy load work such as a heavy excavation work for frequently excavating/loading the soil in a construction machine is only a part of the entire work, and, at the time of the light load work such as horizontal drawing for flattening the ground surface, the capacity of an engine becomes surplus. This fact is one of the factors making reduction of the fuel consumption (may be hereinafter referred to as "fuel efficiency") of a hydraulic excavator difficult. In view of this point, such hybrid construction machine is known in which the engine is made compact in order to reduce the fuel consumption, and the power shortage accompanying compactization of the engine is supplemented (assisted) by an output of an electrical storage device and an electric motor. The electric device such as an electrical storage device and an electric motor configuring the hybrid construction machine requires appropriate temperature control for thermal protection of a drive circuit and high efficiency operation.

In particular, with respect to the electrical storage device, while there is an upper limit temperature for usage without limitation of the electric current, the output of the electrical storage device drops at the time of low temperature. In order to use the electrical storage device without causing such drop of the output of the electrical storage device, it is required to heat the electrical storage device to equal to or higher than a predetermined temperature. For example, in Japanese Patent Application Laid-Open No. 2010-127271 (Patent Literature 1), a warm-up method for a hybrid construction machine is proposed in which a warm-up operation is done by activating an engine when the temperature of the battery (electrical storage device) is lower than a preset temperature, an assist motor (motor generator) is activated simultaneously to charge and discharge the electrical storage device, and the temperature of the electrical storage device is raised by utilizing internal heat generation of the electrical storage device (refer to the abstract). Also, in Japanese Patent Application Laid-Open No. 2008-290636 (Patent Literature 2), a hybrid car is described in which there are provided a water-cooled engine and a motor for making a vehicle travel, a battery pack (electrical storage device) for supplying electric power to the motor, an engine radiator that is connected to a cooling water channel of the water-cooled engine for making coolant liquid circulate between the water-cooled engine, and a heat exchanger that is connected to the cooling water channel of the water-cooled engine through a bypass valve and warms up the electrical storage device with the coolant liquid that is made to circulate to the water-cooled engine, and the electrical storage device is warmed up utilizing waste heat of the engine (refer to the abstract).

Citation List

Patent Literature

PTL 1: Japanese Patent Application Laid-Open No. 2010-127271

PTL 2: Japanese Paten Application Laid-Open No. 2008-290636

Summary of Invention

Technical Problem

According to the warm-up method of Patent Literature 1, since the electrical storage device is heated utilizing internal heat generation by charging/discharging of the electrical storage device, when the electric current made to flow through the electrical storage device is small, it takes time for the electrical storage device to reach a predetermined temperature. Accordingly, there is a possibility that an output required for operating the construction machine cannot be secured during that time, and therefore it is concerned about that the work by the construction machine cannot be started immediately.

On the other hand, when the electric current made to flow through the electrical storage device is large, the time required for the warm-up operation of the electrical storage device can be shortened. However, since a load on the electrical storage device increases accompanying increase of the electric current made to flow through the electrical storage device, the electrical storage device becomes liable to deteriorate. Thus, such problem may occur that the replacement frequency of the electrical storage device becomes high, and so on.

Moreover, according to the warm-up method of Patent Literature 2, although the electrical storage device is warmed up by circulating the engine cooling water to the electrical storage device, it is configured to conduct heat exchange with the engine cooling water being separated from the electrical storage device by a water-proof sheet. When the engine cooling water can be in contact with only a part of the electrical storage device because of the structure, only a part of the electrical storage device comes to be warmed up. In such case, temperature dispersion occurs in the inside of plural battery cells that form the electrical storage device. The temperature dispersion within the battery cells causes dispersion of the internal resistance of the battery cells, a portion where the electric current easily flows and a portion where the electric current hardly flows are formed, and deterioration of the battery may be accelerated.

The object of the present invention is to provide a hybrid construction machine that can warm up an electrical storage device quickly and can improve the service life of the electrical storage device.

Solution to Problem

In order to achieve the object described above, a hybrid construction machine of the present invention includes a prime mover, an electric motor that supplements power of the prime mover and generates electric power, an electrical storage device that transmits electric power to and receives electric power from the electric motor, a warm-up circuit that circulates a heating medium heated by waste heat of the prime mover or the electric motor, or by a heater, to the vicinity of the electrical storage device, a control device that controls charging/discharging of the electrical storage device and circulation of the heating medium of the warm-up circuit, and an outside air temperature measuring device that measures outside air temperature, in which the control device executes warm-up operation by means of the heating medium, determines whether to execute charging/discharging of the electrical storage device for the purpose of warm-up operation in response to the outside air temperature as measured by the outside air temperature measuring device, and executes warm-up operation in which the warm-up operation based on charging/discharging of the electrical storage device is executed simultaneously.

Advantageous Effects of Invention

According to the hybrid construction machine of the present invention, an electrical storage device can be warmed up quickly and the service life of the electrical storage device can be improved. Problems, configurations and effects other than the above will be clarified by explanation of embodiments below.

Brief Description of Drawings

[Fig. 1] Fig. 1 is a drawing showing a configuration of a hybrid hydraulic excavator cited as one embodiment of a hybrid construction machine related to the present invention.

[Fig. 2] Fig. 2 is a drawing explaining a configuration of an essential part of the hybrid hydraulic excavator related to one embodiment of the present invention.

[Fig. 3] Fig. 3 is a drawing explaining a configuration of operating levers and a display device inside a cab of the hybrid hydraulic excavator related to one embodiment of the present invention.

[Fig. 4] Fig. 4 is a drawing showing the relation between the charging rate (SOC) and the permissible output of an electrical storage device of the hybrid hydraulic excavator related to one embodiment of the present invention for each temperature of the electrical storage device.

[Fig. 5] Fig. 5 is a drawing showing a configuration of a temperature control device related to one embodiment of the present invention.

[Fig. 6] Fig. 6 is a flowchart explaining motions of cooling operation of the temperature control device related to one embodiment of the present invention.

[Fig. 7] Fig. 7 is a flowchart explaining motions of warm-up operation of the temperature control device related to an embodiment of the present invention.

[Fig. 8] Fig. 8 is a flowchart explaining motions of ON/OFF control of a control valve of warm-up operation of the temperature control device related to one embodiment of the present invention.

[Fig. 9] Fig. 9 is related to one embodiment of the present invention, and is a drawing explaining the relation between dispersion of the internal temperature of a battery cells caused by the outside air temperature and the warm-up time and switching of a warm-up method in response to the outside air temperature.

[Fig. 10] Fig. 10 is related to one embodiment of the present invention, and is a drawing explaining the relation between dispersion of the internal temperature of the battery cells 30 caused by engine rotational speed setting and the warm-up time and switching of a warm-up method in response to the engine rotational speed setting.

[Fig. 11] Fig. 11 is related to one embodiment of the present invention, and is a drawing explaining the relation between dispersion of the internal temperature of the battery cells 30 caused by output mode setting and the warm-up time and switching of a warm-up method in response to the output mode setting.

[Fig. 12] Fig. 12 is related to one embodiment of the present invention, and is a drawing explaining the relation between dispersion of the internal temperature of the battery cells 30 caused by presence/absence of lever operation and the warm-up time and switching of a warm-up method in response to the presence/absence of lever operation.

[Fig. 13] Fig. 13 is related to one embodiment of the present invention, and is a drawing explaining the relation between dispersion of the internal temperature of the battery cells 30 caused by the position of a gate lock lever and the warm-up time and switching of a warm-up method in response to the position of the gate lock lever.

[Fig. 14] Fig. 14 is a drawing explaining a warm-up method in response to the outside air temperature and the engine rotational speed setting related to the present embodiment.

[Fig. 15] Fig. 15 is a drawing explaining a warm-up method in response to the outside air temperature and the output mode setting, or a warm-up method in response to the outside air temperature and the lever operation, or a warm-up method in response to the outside air temperature and the gate lock lever position related to the present embodiment.

[Fig. 16] Fig. 16 is a drawing showing the state of the warm-up operation with respect to a case the warm-up method is switched on the basis of the outside air temperature, and a case the warm-up method is switched on the basis of the battery temperature.

Description of Embodiments

Below, embodiments of a hybrid construction machine related to the present invention will be explained on the basis of the drawings.

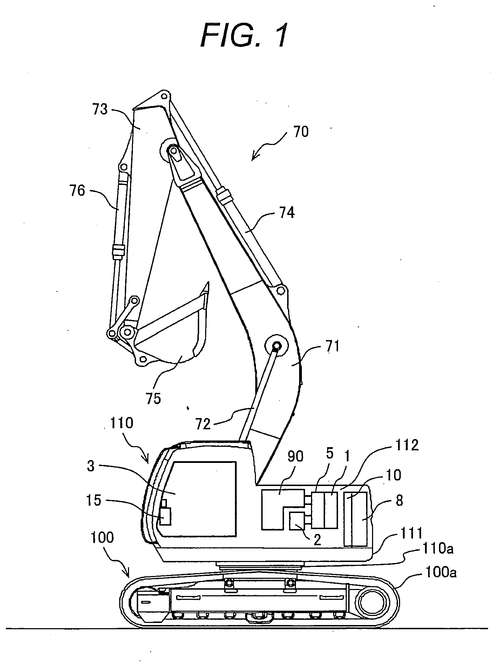

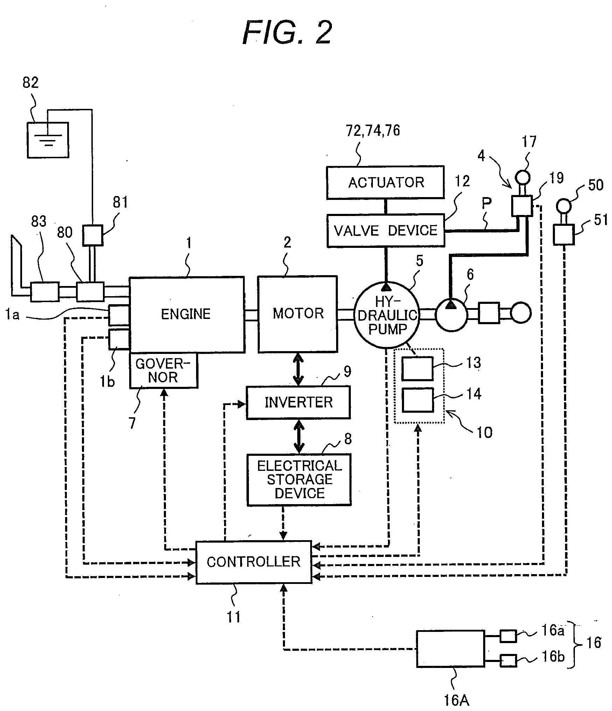

Fig. 1 is a drawing showing a configuration of a hybrid hydraulic excavator cited as an embodiment of a hybrid construction machine related to the present invention. Fig. 2 is a drawing explaining a configuration of an essential part of the hybrid hydraulic excavator related to the present embodiment.

One embodiment of the hybrid construction machine related to the present invention is applied to a hybrid hydraulic excavator (will be hereinafter referred to as "hydraulic excavator" for convenience) as shown in Fig. 1, for example. This hydraulic excavator includes a travel base 100, a revolving upper structure 110 arranged turnably on the travel base 100 through a revolving frame 111, and a front working mechanism 70 that is attached to the front of the revolving upper structure 110, turns in the vertical direction, and executes work of excavation and the like.

The front working mechanism 70 includes a boom 71 that turns in the vertical direction with a base end thereof being turnably attached to the revolving frame 111, an arm 73 that is turnably attached to the distal end of the boom 71, and a bucket 75 that is turnably attached to the distal end of the arm 73.

Also, the front working mechanism 70 includes a boom cylinder 72 that connects the revolving upper structure 110 and the boom 71 and turns the boom 71 by expansion and contraction, an arm cylinder 74 that connects the boom 71 and the arm 73 and turns the arm 73 by expansion and contraction, and a bucket cylinder 76 that connects the arm 73 and the bucket 75 and turns the bucket 75 by expansion and contraction.

As shown in Fig. 1 and Fig. 2, the revolving upper structure 110 includes a cab (cabin) 3 that is arranged at the front part on the revolving frame 111, an engine 1 as a prime mover arranged inside an engine chamber 112 at the rear part on the revolving frame 111, a governor 7 that adjusts the fuel injection amount of the engine 1, a rotational speed sensor 1a that detects the actual rotational speed of the engine 1, an engine torque sensor 1b that detects the torque of the engine 1, and an assist power generation motor 2 as an electric motor that executes supplement of the power of the engine 1 and electric power generation. The assist power generation motor 2 is arranged on a drive shaft of the engine 1, and transmits torque between the engine 1 and the assist power generation motor 2.

Also, the revolving upper structure 110 includes an inverter device 9 that controls the rotational speed of the assist power generation motor 2, an electrical storage device 8 that transmits and receives electric power between the assist power generation motor 2 through the inverter device 9, and a valve device 12 that controls the flow rate and the direction of the pressure oil supplied to hydraulic actuators such as the boom cylinder 72, the arm cylinder 74, and the bucket cylinder 76 described above.

Inside the engine chamber 112 of the revolving upper structure 110, a hydraulic system 90 for driving the hydraulic actuators 72, 74, 76 is arranged. This hydraulic system 90 includes a hydraulic pump 5 that becomes an oil pressure source generating the oil pressure, a pilot hydraulic pump 6 that generates a pilot pressure oil, and an operation device 4 that is connected to an operation unit of the valve device 12 through a pilot pipe P and allows a desired motion of the respective hydraulic actuators 72, 74, 76. The operation device 4 is arranged inside the cab 3, and includes operating levers 17 that are held and operated by an operator.

Also, the revolving upper structure 110 includes a pump displacement adjustment device 10 that adjusts the displacement of the hydraulic pump 5, and a controller 11 as a control device that adjusts the governor 7 to control the rotational speed of the engine 1, and controls the inverter device 9 to control the torque of the assist power generation motor 2. Further, a hydraulic circuit is configured of the hydraulic pump 5, the hydraulic actuators 72, 74, 76, and the valve device 12, and the actual rotational speed of the engine 1 detected by the rotational speed sensor 1a, the torque of the engine 1 detected by the engine torque sensor 1b, the operation amount of the operating levers 17, and the like described above are inputted to the controller 11.

The hydraulic pump 5 is connected to the engine 1 through the assist power generation motor 2, the hydraulic pump 5 and the pilot hydraulic pump 6 are operated by a drive force of the engine 1 and the assist power generation motor 2, thereby the pressure oil discharged from the hydraulic pump 5 is supplied to the valve device 12, and the pressure oil discharged from the pilot hydraulic pump 6 is supplied to the operation device 4.

At this time, when the operator in the cab 3 operates the operating lever 17, the operation device 4 supplies the pilot pressure oil corresponding to the operation amount of the operating lever 17 to an operating section of the valve device 12 through the pilot pipe P, thereby the position of the spool inside the valve device 12 is switched by the pilot pressure oil, and the pressure oil having circulated from the hydraulic pump 5 to the valve device 12 is supplied to the hydraulic actuators 72, 74, 76. Thus, the hydraulic actuators 72, 74, 76 are driven by the pressure oil supplied from the hydraulic pump 5 through the valve device 12.

The hydraulic pump 5 includes a swash plate (not illustrated), for example, as a variable displacement mechanism, and controls the discharge flow rate of the pressure oil by adjusting the tilting angle of this swash plate. Although the hydraulic pump 5 is explained below as a swash plate pump, the hydraulic pump 5 may be a bent axis type pump and the like as far as it is one having a function of controlling the discharge flow rate of the pressure oil. Further, a discharge pressure sensor that detects the discharge pressure of the hydraulic pump 5, a discharge flow rate sensor that detects the discharge flow rate of the hydraulic pump 5, and a tilting angle sensor that measures the tilting angle of the swash plate are arranged in the hydraulic pump 5 although they are not illustrated. The controller 11 is inputted with the discharge pressure, the discharge flow rate, and the tilting angle of the swash plate of the hydraulic pump 5 obtained from each of these sensors, and calculates a load of the hydraulic pump 5.

The pump displacement adjustment device 10 adjusts the capacity (displacement volume) of the hydraulic pump 5 on the basis of an operation signal outputted from the controller 11. In concrete terms, the pump displacement adjustment device 10 includes a regulator 13 that tiltably supports the swash plate, and an electromagnetic proportional valve 14 that applies a control pressure to the regulator 13 according to an instruction value of the controller 11. When the control pressure is received from the electromagnetic proportional valve 14, the regulator 13 changes the tilting angle of the swash plate by this control pressure, thereby the capacity (displacement volume) of the hydraulic pump 5 is adjusted, and the absorption torque (input torque) of the hydraulic pump 5 can be controlled.

In an exhaust passage of the engine 1, an exhaust gas purification system is arranged which purifies the exhaust gas discharged from the engine 1. This exhaust gas purification system includes a selective contact reducing catalyst (SCR catalyst) 80 that promotes the reductive reaction of nitrogen oxide in the exhaust gas formed by ammonia generated from urea as a reducing agent, a reducing agent addition device 81 that adds the urea into the exhaust passage of the engine 1, a urea tank 82 that stores the urea supplied to the reducing agent addition device 81, and a muffler (silencer) 83 that eliminates the exhaust noise of the engine 1. Therefore, the exhaust gas of the engine 1 is discharged to the atmospheric air through the muffler 83 after the nitrogen oxide in the exhaust gas is purified into harmless water and nitrogen by the selective contact reducing catalyst 80.

Since the engine 1, the assist power generation motor 2, the inverter device 9, and the electrical storage device 8 described above generate heat by being continuously used, in order to suppress temperature rise of these devices, a cooling device is included in the revolving upper structure 110.

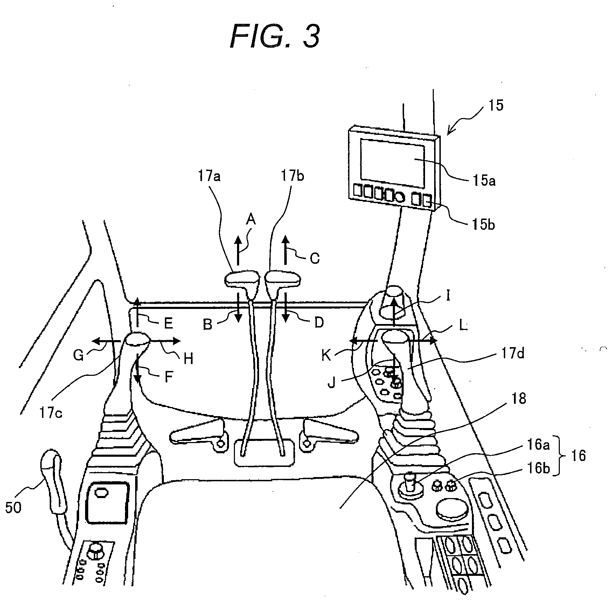

Fig. 3 is a drawing showing in detail a configuration of operating levers 17a to 17d and a display device 15 inside the cab 3.

As shown in Fig. 3, the operating levers 17a to 17d are levers an operator sitting on an operator seat 18, for example, holds for manual operation of the motion of the vehicle body. The operation signal for each of these operating levers 17a to 17d is transmitted to the controller 11.

The operating lever 17a is arranged on the front left side of the operator seat 18, and makes a crawler track 100a on the left side of the travel base 100 travel forward (left crawler track proceeding) by being operated forward (arrow A direction). By being operated rearward (arrow B direction), the operating lever 17a makes the crawler track 100a on the left side of the travel base 100 travel rearward (left crawler track retreating).

The operating lever 17b is arranged on the front right side of the operator seat 18, and makes the crawler track 100a on the right side of the travel base 100 travel forward (right crawler track proceeding) by being operated forward (arrow C direction). By being operated rearward (arrow D direction), the operating lever 17b makes the crawler track 100a on the right side of the travel base 100 travel rearward (right crawler track retreating).

The operating lever 17c is arranged on the left side of the operator seat 18, turns a revolving device 110a to the left (leftward revolving) by being operated forward (arrow E direction), and turns the revolving device 110a to the right (rightward revolving) by being operated rearward (arrow F direction). Also, the operating lever 17c turns the arm 73 upward (arm stretching) by being operated to the left (arrow G direction), and turns the arm 73 downward (arm bending) by being operated to the right (arrow H direction).

The operating lever 17d is arranged on the right side of the operator seat 18, turns the boom 71 downward (boom lowering) by being operated forward (arrow I direction), and turns the boom 71 upward (boom lifting) by being operated rearward (arrow J direction). Also, the operating lever 17d turns the bucket 75 downward (bucket excavation) by being operated to the left (arrow K direction), and turns the bucket 75 upward (bucket opening) by being operated to the right (arrow L direction).

Further, in the cab 3, an operating lever state detection unit 19 (refer to Fig. 2) is arranged which detects the operation state of the operating levers 17a to 17d namely the position of the operating levers 17a to 17d.

The display device 15 is configured of a monitor 15a and operation switches 15b, the monitor 15a displaying information received from the controller 11, the operation switches 15b including an electric supply switch, a selector switch, and the like, the electric supply switch switching the electric supply of the monitor 15a to an ON state or an OFF state, the selector switch switching the image displayed on the monitor 15a when the electric supply switch is in an ON state.

A gate lock lever 50 arranged on the left side of the operator seat 18 is a lever that switches whether or not operation of the hydraulic excavator is allowed. By pushing the gate lock lever 50 forward, the gate lock lever 50 is turned ON which is a state the crawler track 100a, the revolving device 110a, the boom 71, the arm 73, and the bucket 75 do not operate even when the operating levers 17 are operated. This gate lock lever 50 is a safety device of the hydraulic excavator. In order to operate the hydraulic excavator, the gate lock lever 50 is to be pushed rearward to be turned OFF, and the operating levers 17 are to be operated. Further, in the cab 3, a gate lock lever state detection unit 51 (refer to Fig. 2) is arranged which detects the operation state of the gate lock lever 50, namely, the position of the gate lock lever 50.

Further, in the cab 3, an output setting unit 16 is arranged which sets the operation output of the hydraulic excavator. This output setting unit 16 includes an engine rotational speed adjusting dial 16a and an output mode setting switch 16b, for example, the engine rotational speed adjusting dial 16a adjusting the engine rotational speed to set the operation output of the hydraulic excavator, the output mode setting switch 16b setting an economy mode and a power mode. The engine rotational speed adjusting dial 16a and the output mode setting switch 16b are configured that the operator inside the cab 3 selects setting of the operation output of the vehicle body to "small output" (setting suitable to execution of the light load work) or "large output" (setting suitable to execution of the heavy load work) according to the work content. The state of the output setting unit 16 is detected by an output setting detection unit 16A (refer to Fig. 2), and is inputted to the controller 11.

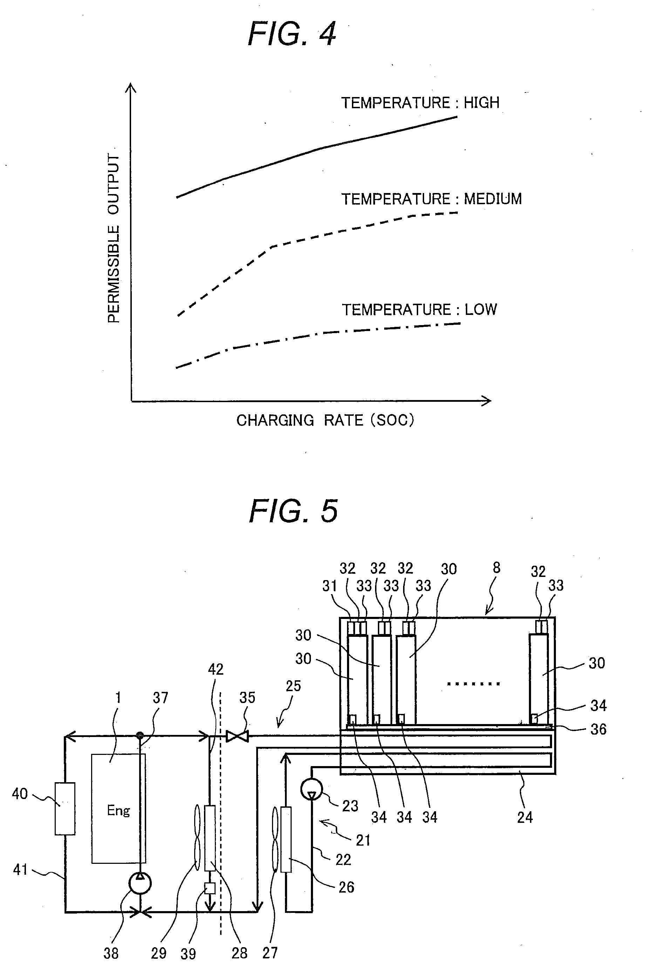

Here, with respect to the electrical storage device 8, since there is an upper limit temperature for allowing usage thereof without limitation of the electric current, it is necessary to cool the electrical storage device 8 so that the temperature thereof does not become excessively high. Also, the permissible output drops when the temperature of the electrical storage device 8 is low. Fig. 4 is a drawing showing the relation between the charging rate (SOC) and the permissible output of the electrical storage device 8 for each temperature (low temperature, medium temperature, high temperature) of the electrical storage device 8. As shown in Fig. 4, the permissible output of the electrical storage device 8 drops when the temperature thereof is low. Therefore, in order to use the electrical storage device 8 without dropping the permissible output, it is necessary to heat the electrical storage device 8 to equal to or higher than a predetermined temperature. In other words, it is necessary to keep the electrical storage device 8 within an appropriate temperature range by warming up the electrical storage device 8. In particular, at the time of starting the hydraulic excavator in winter and so on when the temperature of the outside air is low, there is a case it is preferable to warm up the electrical storage device 8 beforehand before starting work in order to raise the permissible output of the electrical storage device 8.

Fig. 5 is a drawing showing a configuration of a temperature control device 20 that cools or warms up the electrical storage device 8, and keeps the electrical storage device 8 at an appropriate temperature range.

As shown in Fig. 5, the temperature control device 20 includes a cooling circuit 21 and a warm-up circuit 25, the cooling circuit 21 circulating a cooling medium such as the cooling water to the vicinity (position where heat can be transmitted and received) of the electrical storage device 8 to cool the electrical storage device 8, the warm-up circuit 25 circulating a heating medium such as the engine cooling water to the vicinity (position where heat can be transmitted and received) of the electrical storage device 8 to warm up the electrical storage device 8.

The cooling circuit 21 is configured of liquid piping 22, a pump 23, a water jacket 24, and a battery radiator 26, the cooling medium circulating the inside of the liquid piping 22, the pump 23 circulating the cooling medium within the liquid piping 22, the water jacket 24 being characterized as a heat exchange member that executes heat exchange between the electrical storage device 8 and the cooling medium, the battery radiator 26 executing heat exchange between the cooling medium and the outside air, and these respective devices are connected into an annual shape in order by the liquid piping 22. To the battery radiator 26, a blowing fan 27 is attached which takes the outside air into the upper revolving structure 110 and cools the cooling medium and the like.

The warm-up circuit 25 is configured of liquid piping 37, a pump 38, the water jacket 24, and a control valve 35, the heating medium (engine cooling water) having been heated by cooling the engine 1 circulating the inside of the liquid piping 22, the pump 38 circulating the heating medium within the liquid piping 37, the water jacket 24 being characterized as a heat exchange member that executes heat exchange between the electrical storage device 8 and the heating medium, the control valve 35 switching whether or not the heating medium is made to flow through the water jacket 24, and these respective devices are connected into an annual shape in order by the liquid piping 37.

An air heating circuit 41 and an engine cooling circuit 42 are provided in parallel with the warm-up circuit 25, and the inside of the cab 3 can be heated by circulating the heating medium through a heater core 40 that is located in the air heating circuit 41. In the engine cooling circuit 42, an engine radiator 28 and a thermostat 39 are arranged, the engine radiator 28 executing heat exchange between the heating medium (engine cooling water) and the outside air, the thermostat 39 circulating the heating medium to the engine cooling circuit 42 when the temperature of the heating medium (engine cooling water) becomes equal to or higher than a predetermined temperature.

To the engine radiator 28, a blowing fan 29 is attached which takes the outside air into the upper revolving structure 110 and cools the heating medium (engine cooling water).

In order to prevent the foreign matter such as dust and water from entering and damaging the electrical storage device 8, it is preferable that the electrical storage device 8 is covered with a protection cover and the like.

The pump 23 located in the cooling circuit 21 is an electromotive pump, and is ON/OFF-controlled by the controller 11. In contrast, the pump 38 located in the warm-up circuit 25 is a pump directly connected to the engine 1, and is activated constantly accompanying drive of the engine 1.

The control valve 35 is a normal-close valve that opens at the time of ON, and is ON/OFF-controlled by the controller 11. At the time of OFF, the control valve 35 closes, the heating medium does not circulate through the water jacket 24, and the electrical storage device 8 is not warmed up. At the time of ON, the control valve 35 opens, the heating medium circulates through the water jacket 24, and the electrical storage device 8 is warmed up.

The electrical storage device 8 is configured of plural battery cells 30 which are arranged in series along the water jacket 24, for example. These battery cells 30 are fixed to the water jacket 24 in a thermal coupling state through a heat conduction sheet 36. Each battery cell 30 is formed of a lithium ion secondary battery having a rectangular shape. However, each battery cell 30 may be other batteries such as a nickel-hydrogen battery and a nickel-cadmium battery or a capacitor instead of the lithium ion secondary battery.

An electric current sensor 31 as an electric current measuring unit that measures the electric current flowing through the electrical storage device 8, a voltage sensor 32 as a voltage measuring unit that measures the voltage of each battery cell 30, an upper part temperature sensor 33 as an upper part temperature measuring unit that measures the upper part temperature of each battery cell 30, and a lower part temperature sensor 34 as a lower part temperature measuring unit that measures the lower part temperature of each battery cell 30 are attached respectively.

The voltage and the temperature obtained from the plural sensors are calculated by the controller 11, and the average value, the maximum value, and the minimum value of the voltage and the temperature in the electrical storage device 8 are calculated from the measured value of the voltage and the temperature of each battery cell 30. The controller 11 manages the power storage amount of the electrical storage device 8 by calculating the power storage amount of the electrical storage device 8 on the basis of the electric current measured by the electric current sensor 31, the voltage measured by the voltage sensor 32, the temperature measured by the upper part temperature sensor 33, the temperature measured by the lower part temperature sensor 34, and so on. Further, the controller 11 is configured to calculate the charging rate (SOC) from the power storage amount of the electrical storage device 8 calculated, for example.

The voltage sensor 32, the upper part temperature sensor 33, and the lower part temperature sensor 34 are not required to be arranged in all of the battery cells 30 as shown in Fig. 5, and representative points only have to be measured. Further, although the lower part temperature sensor 34 is provided for measuring the temperature of the lower part of the battery cells 30, it may be arranged in the water jacket 24 in the vicinity of the battery cells 30 because of the restriction of the arrangement. In addition, since the lower part temperature sensor 34 is used for obtaining the temperature difference between the top and bottom of the battery cells 30 as described below, it is preferable to arrange the lower part temperature sensor 34 in the battery cell 30 where the upper part temperature sensor 33 is arranged.

Although the fan 27 and the fan 29 are shown as the separate ones in Fig. 5, it is also possible that one fan blows the air to the battery radiator 26 and the engine radiator 28. The fan 27 and the fan 29 are configured to be driven directly by the engine 1.

The water jacket 24 is formed of a metal member having a thin sheet shape, and has a channel allowing the cooling medium and the heating medium to flow therethrough. The water jacket 24 includes a cooling medium inlet through which the cooling medium flows in to the inside, grooves formed in the inside and allowing the cooling medium having flown in through the cooling medium inlet to circulate therethrough, a cooling medium outlet through which the cooling medium having circulated through the grooves flows out to the outside, a heating medium inlet through which the heating medium flows in to the inside, grooves formed in the inside and allowing the heating medium having flown in through the heating medium inlet to circulate therethrough, and a heating medium outlet through which the heating medium having circulated through the grooves flows out to the outside although they are not illustrated. The cooling medium and the heating medium circulating through the inside of the water jacket 24 transmit and receive heat to and from each battery cell 30 through the heat conduction sheet 36.

Since the water jacket 24 is the metal member as described above, there is a potential difference between neighboring battery cells 30. Therefore, when the battery cells 30 are made to directly be contact with the water jacket 24, a large short-circuit current flows. The heat conduction sheet 36 interposed between the battery cells 30 and the water jacket 24 has a function of avoiding such short-circuit current. In other words, the heat conduction sheet 36 insulates the battery cells 30 and the water jacket 24 from each other, and effects heat exchange efficiently between the battery cells 30 and the water jacket 24. The heat conduction sheet 36 is formed of an elastic body, a silicone resin sheet, a plastic sheet filled with a filler with excellent thermal conductivity, or mica, and the like are used, for example, as the elastic body, however, others may be used as far as they have a similar function.

In the above, the engine cooling water heated by cooling the engine 1 was used as the heating medium, however, others may be used as far as a similar effect is secured, and one heated by an on-vehicle device such as the heater, the assist power generation motor 2, or the inverter device 9 may be used.

The controller 11 shown in Fig. 2 has a function as a control device of the temperature control device 20 that cools or warms up the electrical storage device 8 and maintains the same at an appropriate temperature range. Further, the controller 11 also has a function of forcibly charging/discharging the electrical storage device 8 for the purpose of warm-up, and generating heat by an internal resistance (DCR) of the electrical storage device 8. Thus, the warm-up operation of the electrical storage device 8 related to the present embodiment is to be executed by plural methods such as the heating medium and charging/discharging of the electrical storage device 8.

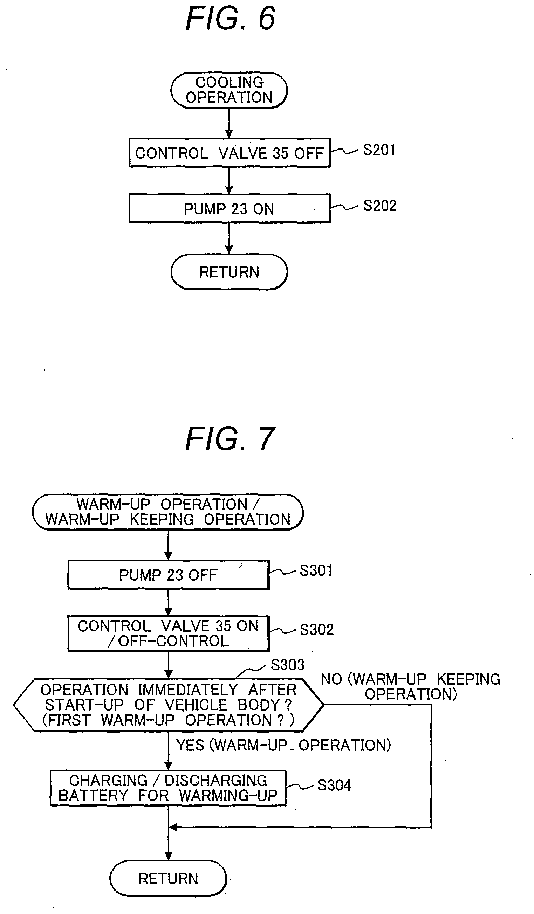

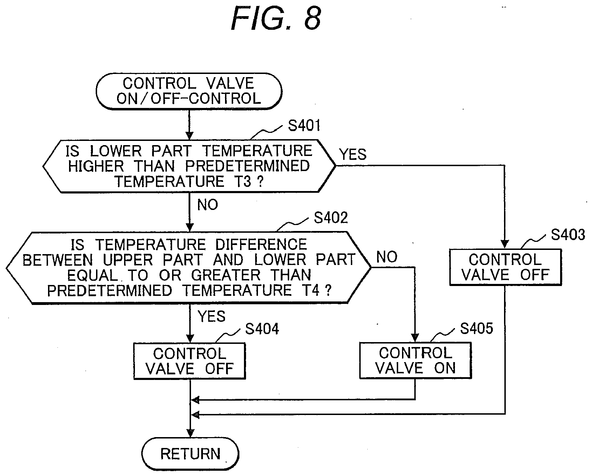

Next, the operation motion of the temperature control device 20 related to the present embodiment will be explained referring to Fig. 6, Fig. 7, and Fig. 8. Fig. 6 is a flowchart explaining the motions of the cooling operation of the temperature control device related to the present embodiment. Fig. 7 is a flowchart explaining the motions of the warm-up operation of the temperature control device related to the present embodiment. Fig. 8 is a flowchart explaining the motions of the ON/OFF control of the control valve of the warm-up operation of the temperature control device related to the present embodiment.

With respect to temperature control of the electrical storage device 8, there is a case of cooling the cooling medium by the battery radiator 26 (cooling operation), heat of the electrical storage device 8 having been transmitted to the cooling medium, and a case of warm-up by the heating medium having been heated by waste heat of the engine and charging/discharging of the electrical storage device 8 (warm-up operation). The motion of the temperature control device 20 changes in response to the temperature of the electrical storage device 8. The motions of Fig. 6, Fig. 7, and Fig. 8 are executed repeatedly while measuring the temperature, voltage, and electric current at every predetermined time.

First, the motions of the cooling operation of the electrical storage device 8 by the controller 11 related to the present embodiment will be explained using the flowchart shown in Fig. 6. The cooling operation is executed when the highest temperature of the electrical storage device 8 measured by plural upper part temperature sensors 33 is higher than a predetermined temperature T1.

In S201, the control valve 35 is turned OFF, and the heating medium is prevented from circulating through the water jacket 24. Thus, heat of the heating medium is prevented from being transmitted to the electrical storage device 8.

Next, in S202, the pump 23 is turned ON, and the cooling medium is circulated through the water jacket 24. At this time, the heat generated in the electrical storage device 8 is transmitted to the cooling medium that circulates through the inside of the water jacket 24. The cooling medium having been heated inside the water jacket 24 is supplied to the battery radiator 26 and is cooled. In order to control the temperature of the electrical storage device 8, the flow rate of the cooling medium discharged from the pump 23 or the air amount of the outside air blown by the fan 27 only have to be adjusted.

In concrete terms, when the temperature of the electrical storage device 8 measured by the upper part temperature sensors 33 is high, the flow rate of the cooling medium discharged from the pump 23 only has to be increased, or the air amount of the outside air blown by the fan 27 only has to be increased. On the other hand, when the temperature of the electrical storage device 8 measured by the upper part temperature sensors 33 is low, the flow rate of the cooling medium discharged from the pump 23 only has to be reduced, or the air amount of the outside air blown by the fan 27 only has to be reduced.

Next, the motions of the warm-up operation of the electrical storage device 8 by the controller 11 related to the present embodiment will be explained using the flowchart shown in Fig. 7. The warm-up operation is executed when the lowest temperature of the electrical storage device 8 measured by plural upper part temperature sensors 33 is lower than a predetermined temperature T2.

In S301, the pump 23 is turned OFF, and the cooling medium is prevented from circulating through the water jacket 24. Thereby, heat of the electrical storage device 8 is prevented from escaping from the water jacket 24 to the cooling medium. Next, in S302, the control valve 35 is ON-OFF-controlled. The detail of control of the control valve 35 will be described below.

Further, in S303, whether or not the hydraulic excavator is operated immediately after the start-up is determined. In a case of immediately after the start-up, charging/discharging of the electrical storage device 8 for warm-up operation is executed in S304. The reason of doing so is that, immediately after the start-up, the temperature difference between the lowest temperature of the electrical storage device 8 and the temperature T2 is great, the warm-up operation by means of the heating medium and the warm-up operation by charging/discharging of the electrical storage device 8 are to be effected simultaneously to warm up the electrical storage device 8 quickly. In this case, in the warm-up operation by means of the heating medium, it is advisable that, according to the necessity, the devices such as the assist power generation motor 2 and the hydraulic pump 5 are driven and are controlled so as to increase the load of the engine 1, the temperature of the heating medium is raised, and the effect of the warm-up operation is increased. In S303, when the operation of the hydraulic excavator is not immediately after the start-up and the lowest temperature of the electrical storage device 8 measured by the upper part temperature sensors 33 once reaches a temperature equal to or higher than the predetermined temperature T2 and thereafter drops, charging/discharging of the electrical storage device 8 for warming-up are not executed. The reason charging/discharging of the electrical storage device 8 are not executed is that the difference between the lowest temperature of the electrical storage device 8 and the temperature T2 is small, and quick temperature rise of the electrical storage device 8 is possible by warm-up by the heating medium. Another reason is that, by reducing the number of times of charging/discharging of the electrical storage device 8, deterioration of the electrical storage device 8 can be suppressed, and energy consumption of the hydraulic excavator can be reduced. Charging/discharging of the electrical storage device 8 required for the motions of the hydraulic excavator are executed.

Although the temperature control device 20 is operated and the electrical storage device 8 is cooled or warmed up and is kept within an appropriate temperature range as described above, when the lowest temperature of the upper part temperature sensor 33 is equal to or higher than T2 and the highest temperature is equal to or lower than T1, both of the cooling operation and the warm-up operation are not to be executed.

Next, ON/OFF control of the control valve 35 shown in S302 will be explained using the flowchart shown in Fig. 8. This control is for switching whether or not the heating medium is to be circulated through the water jacket 24.

In S401, whether or not the temperature of the lower part temperature sensors 34 is higher than a predetermined temperature T3 set beforehand is determined. When the lower part temperature of the battery cells 30 is determined to be higher than T3 in S401, the control valve 35 is turned OFF and the warm-up operation by means of the heating medium is stopped in S403. The reason of doing so is to prevent the lower part of the battery cells 30 from becoming hot. When the lower part temperature of the battery cells 30 is equal to or lower than the predetermined temperature T3 in S401, whether or not the temperature difference between the upper part and the lower part of the battery cells 30 is equal to or greater than a predetermined temperature T4 set beforehand is determined in S402. When the temperature difference between the upper part and the lower part of the battery cells 30 is equal to or greater than the predetermined temperature T4 in S402, the control valve is turned OFF and the warm-up operation by means of the heating medium is stopped in S404. The reason of doing so is to suppress the temperature dispersion in the inside of the battery cells 30. The temperature dispersion within the battery cells 30 causes dispersion of the internal resistance of the battery cells 30, a portion where the electric current easily flows and a portion where the electric current does not easily flow are separated and deterioration of the battery may be accelerated which is the reason of suppressing the temperature dispersion within the battery cells 30. When the temperature difference between the upper part and the lower part of the battery cells 30 is less than the predetermined temperature T4 in S402, the control valve 35 is turned ON and the warm-up operation by means of the heating medium is executed in S405.

The lower part temperature of the battery cells 30 used for determination of S401 may be the highest temperature among all of the lower part temperature sensors 34, and, when a point where the lower part temperature is highest is known beforehand, may be the temperature of the point. Further, the temperature difference between the upper part and the lower part of the battery cells 30 used for determination of S402 may be the maximum temperature difference among all of the measuring positions, and, when a position where the temperature difference is greatest is known beforehand, may be the temperature difference of the point.

As described above, it is configured that the control valve 35 is ON/OFF-controlled, the lower part of the battery cells 30 is prevented from becoming hot, and the temperature dispersion in the inside of the battery cells 30 is suppressed.

Here, the reason the temperature dispersion is liable to occur within the battery cells 30 by the warm-up operation by means of the heating medium is that the lower surface of the battery cells 30 at a low temperature is heated by the heating medium as shown in Fig. 5. Although it is desirable that the side surface and the top surface of the battery cells 30 also can be heated by the heating medium, it is difficult because of the restriction of the construction of the electrical storage device 8. Therefore, the temperature of the lower part of the battery cells 30 becomes higher than the temperature of the upper part.

Next, calculation of the charging/discharging electric current of the electrical storage device 8 for the warm-up operation shown in S304 will be explained.

The charging/discharging electric current for the warm-up operation is calculated, for example, on the basis of the voltage measured by the voltage sensor 32, the state of charging/discharging of the electrical storage device 8, and predetermined upper and lower limit values Vmax, Vmin of the voltage of the electrical storage device 8. Here, when the closed circuit voltage (CCV) that is the inter-terminal voltage of one battery cell 30 in a state a load is connected to the electrical storage device 8 is made VI, the open circuit voltage (OCV) that is one inter-terminal voltage in a state a load is not connected to the electrical storage device 8 is made V2, the internal resistance (DCR) of the electrical storage device 8 is made r, and the electric current flowing through the electrical storage device 8 is made I, we have the following mathematical expression (Math. 1).

$$V1 = V2 + r \cdot I \qquad \text{(Math. 1)}$$

The predetermined upper and lower limit values of the voltage of the electrical storage device 8 have been determined beforehand by the battery specification or the system specification of the hydraulic excavator as the voltage upper limit value Vmax and the voltage lower limit value Vmin of the electrical storage device 8.

Since the voltage of each battery cell 30 of the electrical storage device 8 should be set to the range between the voltage upper limit value Vmax and the voltage lower limit value Vmin, when the electric current I at the time of charging is a positive value, the electric current should be set to the electric current I with which the closed circuit voltage (CCV) V1 becomes lower than the voltage upper limit value Vmax. On the other hand, the electric current I at the time of discharging is a negative value, the electric current should be set to the electric current I with which the closed circuit voltage (CCV) V1 becomes higher than the voltage lower limit value Vmin.

The open circuit voltage (OCV) V2 shown in Math. 1 described above changes according to the temperature and the charging rate (SOC) of the battery cells 30, and the internal resistance (DCR) r also changes according to the temperature and the charging rate (SOC) of the battery cells 30. In particular, since the internal resistance (DCR) r increases at the time of a low temperature, the electric current I with which the closed circuit voltage (CCV) V1 is made lower than the voltage upper limit value Vmax and higher than the voltage lower limit value Vmin becomes small. In other words, the electric current I becomes smaller as the temperature is lower, and becomes larger as the temperature is higher. The electric current made to flow through the electrical storage device 8 differs according to the state of charging/discharging of the electrical storage device 8 (charging or discharging), and the state of charging/discharging is determined by the controller 11 in response to the charging rate (SOC) of the electrical storage device 8.

It is configured that discharging of the electrical storage device 8 during the warm-up operation activates at least one of the hydraulic pump 5, the hydraulic actuators 72, 74, 76, and the valve device 12 which configures the hydraulic circuit.

Since the engine 1 and the hydraulic pump 5 are mechanically connected to the assist power generation motor 2, these engine 1 and hydraulic pump 5 become electrical loads of the assist power generation motor 2. Charging of the electrical storage device 8 during the warm-up operation is executed by causing the assist power generation motor 2 to generate electric power.

Further, the absolute value of the electric current calculated as described above may be reduced by restriction in the hydraulic shovel. In the present embodiment, it is configured that charging/discharging of the electrical storage device 8 is executed giving a priority to the motion of the hydraulic excavator.

As described above, in the warm-up operation immediately after the start-up of the hydraulic excavator, the heating medium and charging/discharging of the electrical storage device 8 are effected simultaneously. The reason not only the heating medium but also charging/discharging of the electrical storage device 8 is effected is not only for shortening the warm-up time (time required for the warm-up operation) but also for heating the electrical storage device 8 from the inside and suppressing the temperature dispersion within the electrical storage device 8. In other words, by effecting the warm-up operation by means of the heating medium and the warm-up operation by charging/discharging of the electrical storage device 8 simultaneously, the electrical storage device 8 can be heated from the outside by the warm-up operation by means of the heating medium, and the electrical storage device 8 can be heated from the inside by charging/discharging of the electrical storage device 8. Thus, the electrical storage device 8 can be heated efficiently and uniformly. However, considering deterioration of the electrical storage device 8 and reduction of energy consumption of the hydraulic shovel, it is preferable not to execute charging/discharging of the electrical storage device 8 to a maximum extent.

Therefore, it is configured that charging/discharging of the electrical storage device 8 for the purpose of the warm-up operation is not executed according to the outside air temperature and the state of the hydraulic shovel. The state of the hydraulic shovel is detected by a vehicle body state detection unit (vehicle body state detection means). In the present embodiment, the vehicle body state detection unit is configured to detect engine rotational speed setting, output mode setting, operating lever state, and gate lock lever state. With respect to engine rotational speed setting and output mode setting, setting of the output setting unit 16 that includes the engine adjusting dial 16a and the output mode setting switch 16b is detected by the output setting detection unit 16A. The operating lever state and the gate lock lever state are detected by the operating lever state detection unit 19 and the gate lock lever state detection unit 51, respectively. In other words, in the present embodiment, the vehicle body state detection unit is configured of the output setting detection unit 16A, the operating lever state detection unit 19, and the gate lock lever state detection unit 51. Further, although the outside air temperature is detected by an outside air temperature measurement means (an outside air temperature measuring device), since the initial temperature of the upper part temperature sensor 33, for example, is same to the outside air temperature, this initial temperature can be used as the outside air temperature. Other devices may be used as far as the outside air temperature can be detected. For example, as the outside air temperature measurement means, a suction air temperature sensor of the engine and a temperature sensor of an air conditioner may be used.

Next, the relation of the outside air temperature and the state of the hydraulic shovel, the dispersion of the internal temperature of the battery cells 30, and the warm-up time, and switching of the warm-up method will be explained.

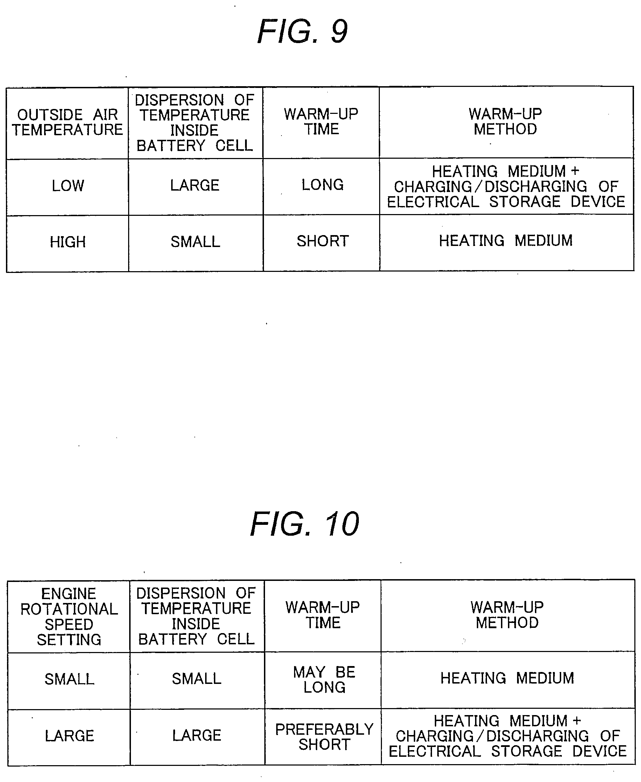

Fig. 9 is a drawing explaining the relation between the dispersion of the internal temperature of the battery cells caused by the outside air temperature and the warm-up time, and switching of the warm-up method in response to the outside air temperature.

As shown in Fig. 9, when the outside air temperature is low, since the initial temperature of the battery cells 30 is low, the dispersion of the internal temperature of the battery cells 30 is liable to become large in warming-up by the heating medium. Since the initial temperature of the battery cells 30 is low and the heat emission amount from the battery cells 30, the water jacket 24, and the like is large, the warm-up time (time required for warming-up) becomes long. Therefore, when the outside air temperature is low, the warm-up operation by means of the heating medium and charging/discharging of the electrical storage device is required. When the outside air temperature is high, since the dispersion of the internal temperature of the battery cells 30 is small and the warm-up time is short, the warm-up operation by means of the heating medium only is enough.

Fig. 10 is a drawing explaining the relation between the dispersion of the internal temperature of the battery cells 30 caused by engine rotational speed setting and the warm-up time, and switching of the warm-up method in response to the engine rotational speed setting.

As shown in Fig. 10, when the engine rotational speed setting is low, since the engine output is small and the waste heat of the engine 1 reduces, the temperature of the heating medium lowers, and therefore the dispersion of the internal temperature of the battery cells 30 becomes small. The event that the engine rotational speed setting is low means that the operator does not require a large output to the hydraulic excavator, and therefore the warm-up time (time required for warming-up) can be long. The reason is that, when the output can be reduced, the temperature of the electrical storage device 8 can be lowered as known from Fig. 4. Therefore, when the engine rotational speed setting is low, the warm-up operation by means of the heating medium only is enough. When engine rotational speed setting is high, dispersion of the internal temperature of the battery cells 30 becomes large, the operator intends to shorten the warm-up time, and therefore the warm-up operation by means of the heating medium and charging/discharging of the electrical storage device is required.

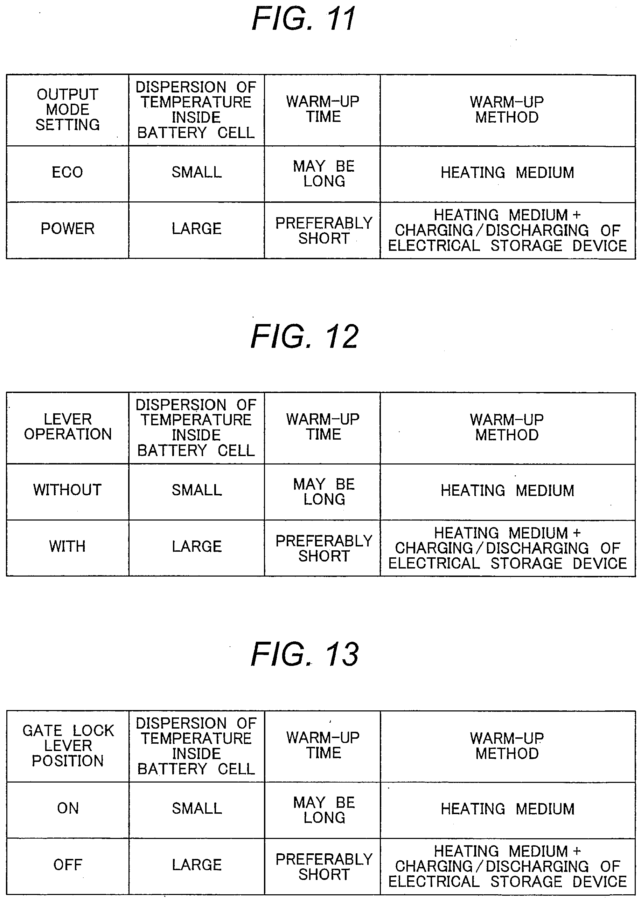

Fig. 11 is a drawing explaining the relation between the dispersion of the internal temperature of the battery cells 30 caused by output mode setting and the warm-up time, and switching of the warm-up method in response to the output mode setting.

As shown in Fig. 11, when the output mode setting is an eco-mode, since the engine output is less and the waste heat of the engine 1 reduces, the temperature of the heating medium lowers, and therefore the dispersion of the internal temperature of the battery cells 30 becomes small. The event that the output mode setting is the eco-mode means that the operator does not require a large output to the hydraulic excavator, and therefore the warm-up time (time required for warming-up) can be long as described above. Accordingly, when the output mode setting is the eco-mode, the warm-up operation by means of the heating medium only is enough. When output mode setting is a power mode, dispersion of the internal temperature of the battery cells 30 becomes large, the operator intends to shorten the warm-up time, and therefore the warm-up operation by means of the heating medium and charging/discharging of the electrical storage device is required.

Fig. 12 is a drawing explaining the relation between the dispersion of the internal temperature of the battery cells 30 caused by presence/absence of the lever operation and the warm-up time, and switching of the warm-up method in response to the presence/absence of the lever operation.

As shown in Fig. 12, when the operator does not move the operating levers 17 and the worm-up operation of the front working mechanism 70 is not executed, since the engine output is less and the waste heat of the engine 1 reduces, the temperature of the heating medium lowers, and therefore the dispersion of the internal temperature of the battery cells 30 becomes less. Also, the event that the operator does not move the operating levers 17 means that the operator does not have to operate the hydraulic excavator quickly, and therefore the warm-up time (time required for warming-up) can be long. Accordingly, when there is no operation of the levers, the warm-up operation by means of the heating medium only is enough. In contrast, when there is operation of the levers, dispersion of the internal temperature of the battery cells 30 becomes large, the operator intends to shorten the warm-up time, and therefore the warm-up operation by means of the heating medium and charging/discharging of the electrical storage device is required.

Fig. 13 is a drawing explaining the relation between the dispersion of the internal temperature of the battery cells 30 caused by the position of the gate lock lever and the warm-up time, and switching of the warm-up method in response to the position of the gate lock lever.

As shown in Fig. 13, when the gate lock lever is ON and the warm-up operation of the front working mechanism 70 is not executed, since the engine output is less and the waste heat of the engine 1 reduces, the temperature of the heating medium lowers, and therefore the dispersion of the internal temperature of the battery cells 30 becomes small. Also, the event that the gate lock lever is ON and the warm-up operation of the front working mechanism 70 is not executed means that the operator does not have to operate the hydraulic excavator quickly, and therefore the warm-up time (time required for warming-up) can be long. Accordingly, when the gate lock lever is ON, the warm-up operation by means of the heating medium only is enough. When the event the gate lock lever is OFF, the dispersion of the internal temperature of the battery cells 30 becomes large, the operator intends to shorten the warm-up time, and therefore the warm-up operation by means of the heating medium and charging/discharging of the electrical storage device is required.

As described above, it is configured that the warm-up method is switched according to the outside air temperature and the state of the hydraulic excavator. Thus, charging/discharging of the electrical storage device 8 for the purpose of the warm-up operation can be reduced. Therefore, the temperature dispersion within the battery cells 30 can be suppressed, and, without compromising the request on the warm-up time, the service life of the electrical storage device 8 can be extended, and energy consumption of the hydraulic excavator can be reduced. In the warm-up operation described above, the warm-up operation by means of the heating medium (the warm-up operation by means of the temperature control device 20) is executed mainly, and the warm-up operation by charging/discharging of the electrical storage device 8 is executed combined with the warm-up operation by means of the heating medium according to the necessity. Such warm-up operation is conducted by turning ON/OFF the warm-up operation by charging/discharging of the electrical storage device 8 in response to the outside air temperature and the state of the hydraulic shovel while executing the warm-up operation by means of the heating medium.

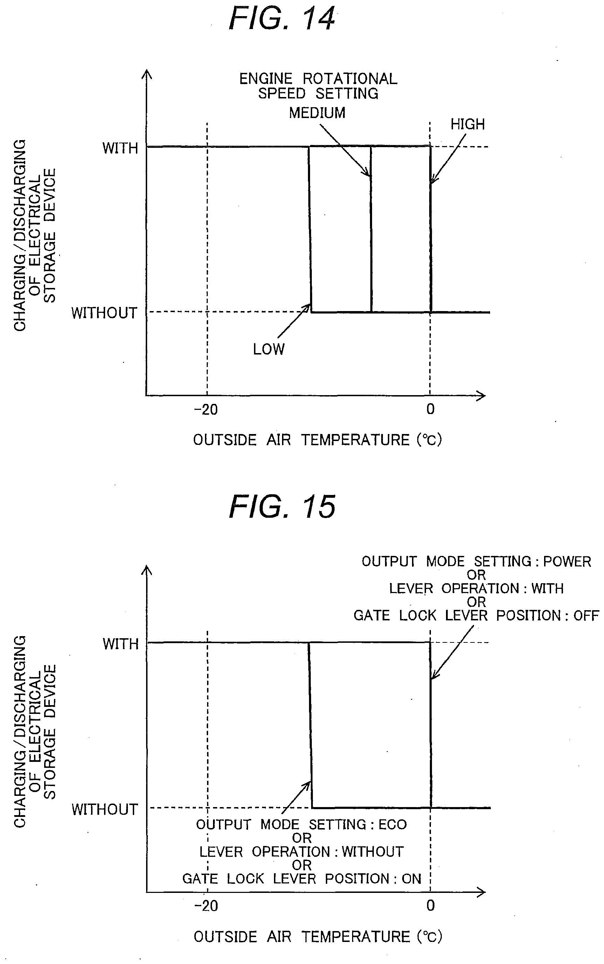

Further, although examples of switching the warm-up method with respect to every one of the outside air temperature and the states of the hydraulic excavator were shown in Fig. 9 to Fig. 13, the warm-up operation may be switched according to the outside air temperature and engine rotational speed setting (presence/absence of charging/discharging of the electrical storage device 8 for the purpose of the warm-up operation) as shown in Fig. 14. Fig. 14 is a drawing explaining the warm-up method in response to the outside air temperature and the engine rotational speed setting. In Fig. 14, the engine rotational speed can be set to high, medium, and low, for example, and presence/absence of charging/discharging of the electrical storage device 8 for the purpose of the warm-up operation is switched according to the engine rotational speed and the outside air temperature. It is configured that, as the engine rotational speed setting is a higher speed and the outside air temperature is lower, charging/discharging of the electrical storage device 8 is executed. In other words, it is configured that charging/discharging of the electrical storage device 8 is switched from presence to absence at a higher outside air temperature when the engine rotational speed is high compared to a case the engine rotational speed is low. The reason is that the dispersion of the internal temperature of the battery cells 30 is liable to become large, and it is required to shorten the warm-up time.

Fig. 15 is a drawing explaining a warm-up method in response to the outside air temperature and the output mode setting, or a warm-up method in response to the outside air temperature and the lever operation, or a warm-up method in response to the outside air temperature and the gate lock lever position. As shown in Fig. 15, the warm-up method may be switched according to the outside air temperature and the output mode setting, or the outside air temperature and the lever operation, or the outside air temperature and the gate lock lever position (presence/absence of charging/discharging of the electrical storage device 8 for the purpose of the warm-up operation). In Fig. 15, it is configured that charging/discharging of the electrical storage device 8 is switched from presence to absence at a higher outside air temperature in the case the output mode setting is "power mode" compared to the case of "eco-mode", in the case the lever operation is "presence" compared to the case of "absence", and in the case the gate lock lever position is ON compared to the case of OFF.

On the monitor 15a of the display device 15 arranged inside the cab 3, the operation mode (cooling, warming-up) of the temperature control device 20 and presence/absence of charging/discharging of the electrical storage device 8 for the purpose of the warm-up operation are displayed. Further, it is configured that setting of the output setting unit 16 for shortening the warm-up time and operation of the operating levers 17 and the gate lock lever 50 are displayed on the monitor 15a. The operator can shorten the warm-up time by looking at the monitor 15a and changing the setting and the operation.

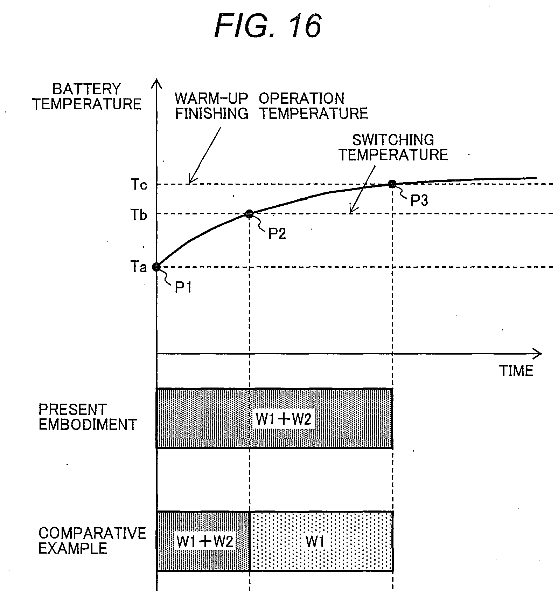

Next, the difference between the case the warm-up method is switched on the basis of the outside air temperature as done in the present embodiment and the case the warm-up method is switched on the basis of the battery temperature as a comparative example against the present embodiment will be explained. Fig. 16 is a drawing showing the state of the warm-up operation with respect to the case the warm-up method is switched on the basis of the outside air temperature, and the case the warm-up method is switched on the basis of the battery temperature. In the upper part of Fig. 16, the vertical axis represents the battery temperature (the temperature of the electrical storage device) T, the horizontal axis represents the time, and the temporal change of the battery temperature T accompanying the warm-up operation is shown. Also, in the lower part of Fig. 16, switching of the warm-up operation with respect to the temporal change of the battery temperature T is shown for the case of the present embodiment and the case of the comparative example. Further, start and stop of the warm-up operation W2 by charging/discharging of the electrical storage device 8 are controlled in response to the outside air temperature in the present embodiment, whereas start and stop of the warm-up operation W2 by charging/discharging are controlled on the basis of the temperature of the electrical storage device 8 or the battery cells 30 (will be hereinafter referred to as "battery temperature") in the comparative example.

With respect to the battery temperature T, four temperatures are set. A temperature Ta is an initial temperature, and the temperature of the electrical storage device 8 at this point P1 is same to the outside air temperature (Ta). A temperature Tb is the temperature for switching the warm-up operation. At the temperature Tb, the warm-up operation is switched from the warm-up operation in which the warm-up operation W1 by the heating medium and the warm-up operation W2 by charging/discharging of the electrical storage device 8 are effected simultaneously to the single warm-up operation W1 by the heating medium. A temperature Tc is the temperature for finishing the warm-up operations W1, W2.

At the point P1 of the initial temperature Ta, there is no difference between the present embodiment and the comparative example, and the warm-up operation is started in which the warm-up operation W1 by the heating medium and the warm-up operation W2 by charging/discharging of the electrical storage device 8 are effected simultaneously. When the battery temperature rises by the warm-up operations W1, W2 and reaches the temperature Tb, in the comparative example, the warm-up operation W2 by charging/discharging of the electrical storage device 8 is stopped at the point P2, and the warm-up operation thereafter shifts to the single warm-up operation W1 by the heating medium. On the other hand, in the present embodiment, even when the battery temperature rises, the warm-up operation is not switched unless the outside air temperature rises, and therefore the warm-up operation is continued in which the warm-up operation W1 by the heating medium and the warm-up operation W2 by charging/discharging of the electrical storage device 8 are effected simultaneously. Also, when the battery temperature reaches the temperature Tc, the warm-up operation is stopped in both of the present embodiment and the comparative example.

When the outside air temperature is low, since the heat emission amount is much, it is preferable not to change the warm-up method during the warm-up operation. When the warm-up method is switched on the basis of the battery temperature as done in the comparative example, the warm-up method comes to be switched in a state of a low outside air temperature. On the other hand, in the present embodiment, since the warm-up method is not switched in a state of a low outside air temperature, stable warm-up operation can be achieved.

Also, the present invention is not limited to the embodiments described above, and various modifications are included therein. For example, the embodiments described above have been explained in detail for easy understanding of the present invention, and are not necessarily limited to those including all configurations explained. Furthermore, with respect to a part of the configuration of the embodiment, addition, deletion, and substitution of another configuration are possible.

In addition, the hybrid construction machine related to the present embodiment was explained for a case of a hybrid hydraulic excavator, however the hybrid construction machine related to the present embodiment is not limited to the case, and may be construction machines such as a hybrid wheel loader.

Reference Signs List

1: engine (prime mover), 2: assist power generation motor (electric motor), 4: operation device, 8: electrical storage device, 11: controller, 15: display device, 15a: monitor, 15b: operation switch, 16: output setting unit, 16a: engine rotational speed adjusting dial (output setting unit), 16b: output mode setting switch, 17: operating lever, 19: operating lever state detection unit: 20: temperature control unit, 22: liquid piping, 23: pump, 24: water jacket, 25: warm-up circuit, 30: battery cell, 33: upper part temperature sensor, 34: lower part temperature sensor, 35: control valve, 36: heat conduction sheet, 40: heater core, 41: air heating circuit, 42: engine cooling circuit, 50: gate lock lever, 51: gate lock lever state detection unit.

**Claims**

1. A hybrid construction machine, comprising:

    a prime mover;
    an electric motor that supplements power of the prime mover and generates electric power;
    an electrical storage device that transmits electric power to and receives electric power from the electric motor;
    a warm-up circuit that circulates a heating medium heated by waste heat of the prime mover or the electric motor, or by a heater, to a position where heat can be transmitted to and received from the electrical storage device;
    a control device that controls charging/discharging of the electrical storage device and circulation of the heating medium of the warm-up circuit; and

an outside air temperature measuring device that measures outside air temperature, wherein the control device executes warm-up operation by means of the heating medium, determines whether to execute charging/discharging of the electrical storage device for the purpose of warm-up operation in response to the outside air temperature as measured by the outside air temperature measuring device, and executes warm-up operation wherein the warm-up operation based on charging/discharging of the electrical storage device is executed simultaneously when it is determined to execute charging/discharging of the electrical storage device for the purpose of warm-up operation.

2.  The hybrid construction machine according to claim 1 further comprising:

    a temperature sensor that detects temperature of the electrical storage device, wherein the control device executes warm-up operation by charging/discharging of the electrical storage device while executing warm-up operation by means of the heating medium when the outside air temperature is lower than a preset temperature, and stops warm-up operation by charging/discharging of the electrical storage device when temperature detected by the temperature sensor that detects temperature of the electrical storage device reaches a preset temperature.

3.  The hybrid construction machine according to claim 1 further comprising:

    a vehicle body state detection unit that detects at least either one of a setting state or an operation state of the hybrid construction machine, wherein the control device determines whether charging/discharging of the electrical storage device for the purpose of warm-up operation is to be executed in response to a detection result of the vehicle body state detection unit.

4.  The hybrid construction machine according to claim 3, wherein a setting state or an operation state of the hybrid construction machine detected by the vehicle body state detection unit is a setting state or an operation state detected by at least one of an output setting detection unit that detects operation output setting for the hybrid construction machine, an operating lever state detection unit that detects the state of an operating lever that operates the hybrid construction machine, and a gate lock lever state detection unit that detects the state of a gate lock lever that switches whether or not operation of the hybrid construction machine is allowed.

5.  The hybrid construction machine according to claim 1, wherein the electrical storage device is configured of a plurality of battery cells, the battery cells include a lower part temperature sensor that detects temperature of a lower part, and the control device stops warm-up operation by means of the heating medium when temperature detected by the lower part temperature sensor is higher than a preset temperature.

6.  The hybrid construction machine according to claim 1, further comprising:

    a display device that displays a warm-up method selected by the control device, and displays setting or operation of the hybrid construction machine which shortens warm-up time.

## FIG. 1

# FIG. 2

# FIG. 3

# FIG. 4

# FIG. 5

## FIG. 6

```
        ( COOLING   )
        ( OPERATION )
              │
              ▼
   ┌────────────────────────┐
   │ CONTROL VALVE 35 OFF   │──── S201
   └────────────────────────┘
              │
              ▼
   ┌────────────────────────┐
   │     PUMP 23 ON         │──── S202
   └────────────────────────┘
              │
              ▼
        (  RETURN  )
```

## FIG. 7

```
   ( WARM-UP  OPERATION /           )
   ( WARM-UP  KEEPING  OPERATION    )
              │
              ▼
   ┌────────────────────────┐
   │     PUMP 23 OFF        │──── S301
   └────────────────────────┘
              │
              ▼
   ┌────────────────────────┐
   │  CONTROL  VALVE 35 ON  │──── S302
   │   / OFF-CONTROL        │
   └────────────────────────┘
              │              ╱ S303
              ▼                          NO (WARM-UP  KEEPING
   ╱ OPERATION IMMEDIATELY AFTER ╲          OPERATION)
   ╲ START-UP OF VEHICLE BODY ?   ╱────────────┐
     (FIRST  WARM-UP  OPERATION ?)              │
              │                                 │
        YES (WARM-UP  OPERATION)                │
              ▼                                 │
   ┌────────────────────────┐                   │
   │ CHARGING / DISCHARGING │──── S304          │
   │ BATTERY  FOR  WARMING-UP│                  │
   └────────────────────────┘                   │
              │                                 │
              ◄─────────────────────────────────┘
              ▼
        (  RETURN  )
```

# FIG. 8

CONTROL VALVE
ON/OFF-CONTROL

S401

IS LOWER PART TEMPERATURE
HIGHER THAN PREDETERMINED
TEMPERATURE T3 ?

YES

NO

S402

IS TEMPERATURE DIFFERENCE
BETWEEN UPPER PART AND LOWER PART
EQUAL TO OR GREATER THAN
PREDETERMINED TEMPERATURE T4 ?

NO

S403

CONTROL
VALVE OFF

YES

S404

CONTROL
VALVE OFF

S405

CONTROL
VALVE ON

RETURN

# FIG. 9

| OUTSIDE AIR TEMPERATURE | DISPERSION OF TEMPERATURE INSIDE BATTERY CELL | WARM-UP TIME | WARM-UP METHOD |
|---|---|---|---|
| LOW | LARGE | LONG | HEATING MEDIUM + CHARGING/DISCHARGING OF ELECTRICAL STORAGE DEVICE |
| HIGH | SMALL | SHORT | HEATING MEDIUM |

# FIG. 10

| ENGINE ROTATIONAL SPEED SETTING | DISPERSION OF TEMPERATURE INSIDE BATTERY CELL | WARM-UP TIME | WARM-UP METHOD |
|---|---|---|---|
| SMALL | SMALL | MAY BE LONG | HEATING MEDIUM |
| LARGE | LARGE | PREFERABLY SHORT | HEATING MEDIUM + CHARGING/DISCHARGING OF ELECTRICAL STORAGE DEVICE |

## FIG. 11

| OUTPUT MODE SETTING | DISPERSION OF TEMPERATURE INSIDE BATTERY CELL | WARM-UP TIME | WARM-UP METHOD |
|---|---|---|---|
| ECO | SMALL | MAY BE LONG | HEATING MEDIUM |
| POWER | LARGE | PREFERABLY SHORT | HEATING MEDIUM + CHARGING/DISCHARGING OF ELECTRICAL STORAGE DEVICE |

## FIG. 12

| LEVER OPERATION | DISPERSION OF TEMPERATURE INSIDE BATTERY CELL | WARM-UP TIME | WARM-UP METHOD |
|---|---|---|---|
| WITHOUT | SMALL | MAY BE LONG | HEATING MEDIUM |
| WITH | LARGE | PREFERABLY SHORT | HEATING MEDIUM + CHARGING/DISCHARGING OF ELECTRICAL STORAGE DEVICE |

## FIG. 13

| GATE LOCK LEVER POSITION | DISPERSION OF TEMPERATURE INSIDE BATTERY CELL | WARM-UP TIME | WARM-UP METHOD |
|---|---|---|---|
| ON | SMALL | MAY BE LONG | HEATING MEDIUM |
| OFF | LARGE | PREFERABLY SHORT | HEATING MEDIUM + CHARGING/DISCHARGING OF ELECTRICAL STORAGE DEVICE |

## FIG. 14

## FIG. 15

# FIG. 16

## INTERNATIONAL SEARCH REPORT

| International application No. |
|---|
| PCT/JP2016/056065 |

**A. CLASSIFICATION OF SUBJECT MATTER**
*F02D29/00*(2006.01)i, *B60K6/485*(2007.10)i, *B60W10/06*(2006.01)i, *B60W10/26*(2006.01)i, *B60W20/00*(2016.01)i, *E02F9/20*(2006.01)i

According to International Patent Classification (IPC) or to both national classification and IPC

**B. FIELDS SEARCHED**

Minimum documentation searched (classification system followed by classification symbols)
F02D29/00, B60K6/485, B60W10/06, B60W10/26, B60W20/00, E02F9/20

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2010/079794 A1 (Sumitomo Heavy Industries, Ltd.),<br>15 July 2010 (15.07.2010),<br>paragraphs [0020], [0024], [0026] to [0029], [0033] to [0034], [0042], [0047], [0055] to [0057], [0059] to [0060], [0062], [0068] to [0072], [0074], [0076], [0081] to [0084], [0086], [0088] to [0089], [0103] to [0104]; fig. 1 to 5, 8 to 9<br>& US 2011/0270481 A1<br>paragraphs [0031], [0035], [0037] to [0040], [0044] to [0045], [0053], [0058], [0066], [0068], [0070] to [0071], [0073], [0079] to [0083], [0087], [0092] to [0095], [0097], [0099] to [0100], [0114] to [0115]; fig. 1 to 5, 8 to 9<br>& EP 2374945 A1    & CN 102272389 A | 1-2<br>3-6 |

☒ Further documents are listed in the continuation of Box C.　　☐ See patent family annex.

| * Special categories of cited documents: |
|---|
| "A" document defining the general state of the art which is not considered to be of particular relevance |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| "T" later document published after the international filing date or priority date and not in conflict with the application but cited to understand the principle or theory underlying the invention |
|---|
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search<br>16 March 2016 (16.03.16) | Date of mailing of the international search report<br>29 March 2016 (29.03.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2016/056065

C (Continuation). DOCUMENTS CONSIDERED TO BE RELEVANT

| Category* | Citation of document, with indication, where appropriate, of the relevant passages | Relevant to claim No. |
|---|---|---|
| | & KR 10-2011-0102396 A | |
| Y | JP 2012-140771 A (Hitachi Construction Machinery Co., Ltd.), 26 July 2012 (26.07.2012), paragraphs [0012] to [0024], [0031] to [0032], [0036] to [0037], [0048], [0053] to [0056], [0070] to [0081]; fig. 1 to 3, 5, 7 & US 2013/0275011 A1 paragraphs [0012] to [0024], [0039], [0043], [0060] to [0063], [0077] to [0079], [0082], [0085] to [0088]; fig. 1 to 3, 5, 7 & WO 2012/091067 A1 & EP 2660395 A1 & CN 103140634 A & KR 10-2014-0009128 A | 3-6 |
| A | JP 2015-016824 A (Hitachi Construction Machinery Co., Ltd.), 29 January 2015 (29.01.2015), entire text; all drawings (Family: none) | 1-6 |
| A | JP 2013-052866 A (Sumitomo Heavy Industries, Ltd.), 21 March 2013 (21.03.2013), entire text; all drawings (Family: none) | 1-6 |
| A | JP 2010-127271 A (Sumitomo Heavy Industries, Ltd.), 10 June 2010 (10.06.2010), entire text; all drawings (Family: none) | 1-6 |

Form PCT/ISA/210 (continuation of second sheet) (January 2015)

**EP 3 267 015 A1**

**Patent documents cited in the description**

- JP 2010127271 A

- JP 2008290636 A